# EUROPEAN PATENT APPLICATION

(11) **EP 4 845 015 A1**
(43) Date of publication of application: **25.11.2026**
(21) Application number: 25747715.8
(22) Date of filing: 22.01.2025
(51) Int. Cl.: H02M 7/493, H02J 3/38, H02M 1/36

(54) **POWER CONVERTER, POWER SUPPLY SYSTEM AND BLACK START METHOD**

(30) Priority: 04.02.2024 CN 202410161394
(71) Applicant: Huawei Digital Power Technologies Co., Ltd., Shenzhen, Guangdong 518043 (CN)
(72) Inventor: ZHANG, Fenggang, Shenzhen, Guangdong 518043 (CN); CHEN, Aitang, Shenzhen, Guangdong 518043 (CN); FENG, Yupeng, Shenzhen, Guangdong 518043 (CN)
(74) Representative: Gill Jennings & Every LLP
(86) International application number: PCT/CN2025/074081
(87) International publication number: WO 2025/162145

(57) **Abstract**

This application provides a power converter, a power supply system, and a black start method. The power converter includes a controller and an inverter circuit. When a voltage of an alternating current bus is less than a first voltage threshold, the controller is configured to: control the inverter circuit to output, to the alternating current bus, an alternating current whose amplitude is a first initial voltage; and then control the inverter circuit to output, to the alternating current bus, an alternating current whose amplitude is a rated voltage of the alternating current bus. When the voltage of the alternating current bus is greater than or equal to a second voltage threshold and less than the rated voltage of the alternating current bus, the controller is further configured to: control the inverter circuit to output, to the alternating current bus, an alternating current whose amplitude is a second initial voltage; and then control the inverter circuit to output, to the alternating current bus, an alternating current whose amplitude is the rated voltage of the alternating current bus. According to this application, the power converter can perform a black start with load without relying on information exchange with another power converter. This achieves high reliability, a simple structure, low costs, and high applicability.

## Description

This application claims priority to Chinese Patent Application No. 202410161394.2, filed with the China National Intellectual Property Administration on February 4, 2024 and entitled "POWER CONVERTER, POWER SUPPLY SYSTEM, AND BLACK START METHOD", which is incorporated herein by reference in its entirety.

### TECHNICAL FIELD

This application relates to the field of power electronics technologies, and in particular, to a power converter, a power supply system, and a black start method.

### BACKGROUND

In the field of power electronics technologies, a power converter may supply power to a load (for example, a local power consuming device). The power converter usually includes a plurality of power converters. The plurality of power converters separately convert direct current energy transmitted by a direct current power supply (for example, a photovoltaic module or an energy storage battery) into alternating current energy, transmit the alternating current energy to an alternating current bus, and provide the alternating current energy to a load end through the alternating current bus. In a process in which a power supply system is started for the first time or restarted, each power converter needs to perform a black start with load, to transmit electric energy to the load end. However, consuming power of the load end cannot be determined. Therefore, when the consuming power of the load end is excessively high or some power converters complete the black start asynchronously (that is, the power converters are started in series), which causes output power of the system to be less than the consuming power of the load end, the black start may fail. In a conventional technology, an information transfer module is usually installed between power converters, or an upper-layer controller is installed in the power supply system, so that each power converter synchronously outputs the alternating current energy to a load. However, these black start methods are cumbersome, and a black start process completely relies on the information transfer module or the controller in the system for coupling between the power converters. These black start methods are not applicable to a power supply system in which there is no information exchange between power converters. In addition, the start methods are complex, system layout costs are high, reliability is low, and adaptability is poor.

### SUMMARY

This application provides a power converter, a power supply system, and a black start method, so that a black start with load can be implemented based on a voltage of an alternating current bus without relying on information exchange with another power converter. This achieves high reliability, a simple structure, low costs, and high applicability.

According to a first aspect, this application provides a power converter. The power converter includes a controller and an inverter circuit. Herein, a direct current end of the inverter circuit may be configured to connect to a photovoltaic module or an energy storage battery. An alternating current end of the inverter circuit may be configured to: connect to an alternating current bus in parallel with another power converter, and then connect to a load. The controller is connected to the inverter circuit. In a black start process, when a voltage of the alternating current bus is less than a first voltage threshold, the controller may be configured to: control the inverter circuit to output, to the alternating current bus, an alternating current whose amplitude is a first initial voltage; and then control the inverter circuit to output, to the alternating current bus, an alternating current whose amplitude is a rated voltage of the alternating current bus, to complete a black start. Herein, the first initial voltage is greater than or equal to the first voltage threshold and less than the rated voltage of the alternating current bus. In the black start process, when the voltage of the alternating current bus is greater than or equal to a second voltage threshold and less than the rated voltage of the alternating current bus, the controller may be configured to: control the inverter circuit to output, to the alternating current bus, an alternating current whose amplitude is a second initial voltage; and then control the inverter circuit to output, to the alternating current bus, the alternating current whose amplitude is the rated voltage of an alternating current bus voltage, to complete the black start. Herein, a voltage of the alternating current whose amplitude is the second initial voltage is synchronous with the voltage of the alternating current bus, and the second voltage threshold is greater than or equal to the first voltage threshold.

In this application, in a process in which each power converter in a power supply system is started for the first time or restarted, each power converter needs to perform the black start with load, to transmit electric energy to a load end. Herein, the power converter needs to be started together with another power converter in the system in a period of start time, so that generating power of a plurality of power converters is greater than consuming power of the load, to complete the black start of the system. Specifically, the controller in the power converter may obtain the voltage of the alternating current bus after initialization is completed, to determine, based on a magnitude of the voltage of the alternating current bus, whether another power converter supplies power to the alternating current bus.

According to this application, the power converter may determine, based on the voltage of the alternating current bus, whether another power converter supplies power to the alternating current bus, to output initial voltages of different magnitudes to the alternating current bus based on the magnitude of the voltage of the alternating current bus, and then increase an amplitude of an alternating current output to the alternating current bus to the rated voltage of the alternating current bus. Herein, the power converter can implement the black start with load in a scenario in which the power converter does not rely on communication or exchange with another power converter or an upper-layer controller. This achieves high reliability, a simple structure, low costs, and high applicability.

In a possible implementation, when the voltage of the alternating current bus is continuously less than the first voltage threshold within specified time, the controller may be configured to control the inverter circuit to output, to the alternating current bus, the alternating current whose amplitude is the first initial voltage.

Herein, time at which the plurality of power converters complete initialization may be different. That is, power-on moments of the power converters may be different. Therefore, the power converter may continuously obtain the voltage of the alternating current bus within the specified time, to more accurately determine whether another power converter supplies power to the alternating current bus. The specified time herein may be duration from the power-on moment of the power converter to a delayed start moment, and the delayed start moment may be a delayed start moment, set based on an application scenario, of the power converter. In other words, the controller herein may continuously obtain the voltage of the alternating current bus within the specified time. When the voltage of the alternating current bus is continuously less than the first voltage threshold within the specified time, it may be considered that no other power converter in the system supplies power to the alternating current bus in this case. Herein, a power converter whose power-on moment is earlier may determine, within the specified time, that no other power converter supplies power to the alternating current bus, and then supply power to the alternating current bus, so that a success rate of the black start can be further improved.

In a possible implementation, the controller herein may be configured to control the inverter circuit to increase, based on a specified voltage step or a specified voltage change rate, the amplitude of the alternating current output to the alternating current bus to the rated voltage of the alternating current bus. Herein, a manner of boosting an output voltage may be preset in each power converter, to ensure that the power converters still remain synchronous in a process of boosting the output voltage. Specifically, a specified voltage step or a specified voltage change rate of each power converter may be preset, so that a controller of each power converter can control an inverter circuit to synchronously boost, based on a parameter such as the same specified voltage step or specified voltage change rate, a voltage of an alternating current output to the alternating current bus, so as to avoid a black start failure caused by a large circulating current generated between the power converters due to asynchronization of voltages of output alternating currents in the voltage boosting process. A control method is simple with high reliability and high applicability.

In a possible implementation, after the alternating current whose amplitude is the rated voltage of the alternating current bus is output to the alternating current bus, when the voltage of the alternating current bus is less than or equal to a third voltage threshold, the alternating current bus is powered off. The controller herein may be further configured to perform the black start again after the alternating current bus is powered off. Herein, when consuming power of the load in the system is excessively high, or power output to the alternating current bus is excessively low due to an excessively small quantity of power converters started at the same time in the system, or the like, the alternating current bus may be powered off, and the black start of the system may fail. For example, the power-on moments of the power converters in the system are different. When power-on moments of some power converters are earlier, and power-on moments of some other power converters are later, it is possible that some power converters have separately output, to the alternating current bus, an alternating current whose amplitude is the rated voltage of the alternating current bus, but some other power converters do not start to output voltages. As a result, output power of the power converters that separately output the rated voltage of the alternating current bus may be less than the consuming power of the load, and consequently, the alternating current bus is powered off within power-off detection time. Therefore, it may be understood that, after the alternating current whose amplitude is the rated voltage of the alternating current bus is output to the alternating current bus, when the voltage of the alternating current bus is less than or equal to the third voltage threshold, the alternating current bus is powered off, and it may be considered that the black start of the power converter fails, and the controller may perform the black start again. A determining method is simple, to avoid continuously outputting electric energy to the alternating current bus after the alternating current bus is powered off, so that energy supply costs are reduced.

In a possible implementation, after the alternating current bus is powered off, when the voltage of the alternating current bus is continuously less than the first voltage threshold within specified waiting time, the controller may be further configured to perform the black start again after the specified waiting time ends. Herein, after the alternating current bus is powered off, or after the black start fails, the power converter may reperform the black start, that is, perform the black start again. It may be understood that the controller may wait for a period of time after the alternating current bus is powered off, that is, perform the black start again after the specified waiting time. Herein, the specified waiting time is set, so that it can be ensured, to a greatest extent, that more power converters in the system complete initialization, that is, are in a power-on state, and frequent attempts of the power converter to perform the black start within the specified waiting time are avoided.

According to this application, the power converter may wait, within the specified waiting time, for another power converter to be in the power-on state, and detect whether another power converter supplies power to the alternating current bus within the specified waiting time. If no other power converter supplies power to the alternating current bus within the specified waiting time, the power converter may perform the black start again after the specified waiting time. Herein, after the alternating current bus is powered off, the power converter can perform the black start with load again in the scenario in which the power converter does not rely on communication or exchange with another power converter or the upper-layer controller, to further improve the success rate and reliability of the black start, which has low costs and high applicability.

In a possible implementation, after the alternating current bus is powered off, when the voltage of the alternating current bus is greater than or equal to the second voltage threshold within specified waiting time, the controller may be further configured to control the inverter circuit to output, to the alternating current bus, the alternating current whose amplitude is the second initial voltage, to perform the black start again. Herein, within the specified waiting time, if the voltage of the alternating current bus is greater than the second voltage threshold, it indicates that another power converter supplies power to the alternating current bus. In this case, the power converter may immediately perform the black start again. That is, the power converter may output, to the alternating current bus, the alternating current whose amplitude is the second initial voltage, or output, to the alternating current bus, the alternating current whose voltage is synchronous with the voltage of the alternating current bus. A control method is simple with high reliability and high applicability.

In a possible implementation, in a sixth possible implementation, the controller herein may be further configured to prolong the specified waiting time after the black start performed again fails. It may be understood that, the power converter may prolong the specified waiting time, to wait, within the specified waiting time, for more power converters to be successfully powered on, or wait for the consuming power of the load to be reduced, so as to further improve the success rate and reliability of the black start again, which has low costs and high applicability.

In a possible implementation, in a seventh possible implementation, the controller herein may be further configured to: when the specified waiting time is greater than a waiting time threshold and the voltage of the alternating current bus is less than the first voltage threshold, or when a quantity of reperformed black starts is greater than or equal to a restart threshold and the voltage of the alternating current bus is less than the first voltage threshold, stop performing the black start again. It may be understood that, when the consuming power of the load is excessively high and is greater than output power of the system, or when another power converter in the system needs to be examined and repaired because the another power converter is faulty and consequently fails to be powered on, or the like, the system may temporarily fail to perform the black start. In this case, the power converter may stop the black start based on an excessively large quantity of reperformed black starts or excessively long specified waiting time. Further, it may be understood that, after the black start is stopped, if the voltage of the alternating current bus is greater than or equal to the second voltage threshold, the power converter learns that the another power converter supplies power to the alternating current bus, and reperforms the black start based on the voltage of the alternating current bus. A determining method is simple, to avoid performing the black start excessively, and further reduce energy supply costs.

According to a second aspect, this application provides a power supply system. The power supply system includes a plurality of power converters according to the first aspect or any one of the possible implementations of the first aspect. A direct current end of an inverter circuit of each power converter of the plurality of power converters may be separately configured to connect to a direct current power supply, and an alternating current end of the inverter circuit of each power converter may be configured to connect to an alternating current bus in parallel and then connect to a load.

According to this application, each power converter in the system may determine, based on a voltage of the alternating current bus within specified time, whether another power converter supplies power to the alternating current bus, to output initial voltages of different magnitudes to the alternating current bus based on a magnitude of the voltage of the alternating current bus, and then increase an amplitude of an alternating current output to the alternating current bus to a rated voltage of the alternating current bus. Herein, each power converter can implement a black start with load in a scenario in which the power converter does not rely on communication or exchange with another power converter or an upper-layer controller. This achieves high reliability, a simple structure, low costs, and high applicability.

According to a third aspect, this application provides a black start method. The method includes: in a black start process, when a voltage of the alternating current bus is less than a first voltage threshold, controlling the inverter circuit to output, to the alternating current bus, an alternating current whose amplitude is a first initial voltage; and then controlling the inverter circuit to output, to the alternating current bus, an alternating current whose amplitude is a rated voltage of the alternating current bus, to complete a black start, where the first initial voltage is greater than or equal to the first voltage threshold and less than the rated voltage of the alternating current bus; or
in the black start process, when the voltage of the alternating current bus is greater than or equal to a second voltage threshold and less than the rated voltage of the alternating current bus, controlling the inverter circuit to output, to the alternating current bus, an alternating current whose amplitude is a second initial voltage, where a voltage of the alternating current whose amplitude is the second initial voltage is synchronous with the voltage of the alternating current bus; and then controlling the inverter circuit to output, to the alternating current bus, the alternating current whose amplitude is the rated voltage of the alternating current bus, to complete the black start, where the second voltage threshold is greater than or equal to the first voltage threshold.

In this application, a controller in the power converter may obtain the voltage of the alternating current bus after initialization is completed, to determine, based on a magnitude of the voltage of the alternating current bus, whether another power converter supplies power to the alternating current bus. According to this application, the power converter may determine, based on the voltage of the alternating current bus within specified time, whether another power converter supplies power to the alternating current bus, to output initial voltages of different magnitudes to the alternating current bus based on the magnitude of the voltage of the alternating current bus, and then increase an amplitude of an alternating current output to the alternating current bus to the rated voltage of the alternating current bus. Herein, the power converter can implement the black start with load in a scenario in which the power converter does not rely on communication or exchange with another power converter or an upper-layer controller. This achieves high reliability, a simple structure, low costs, and high applicability.

In a possible implementation, when the voltage of the alternating current bus is less than the first voltage threshold, controlling the inverter circuit to output, to the alternating current bus, the alternating current whose amplitude is the first initial voltage includes:
when the voltage of the alternating current bus is continuously less than the first voltage threshold within specified time, controlling the inverter circuit to output, to the alternating current bus, the alternating current whose amplitude is the first initial voltage.

Herein, time at which a plurality of power converters complete initialization may be different. That is, power-on moments of the power converters may be different. Therefore, the power converter may continuously obtain the voltage of the alternating current bus within the specified time, to more accurately determine whether another power converter supplies power to the alternating current bus. The specified time herein may be duration from the power-on moment of the power converter to a delayed start moment, and the delayed start moment may be a delayed start moment, set based on an application scenario, of the power converter. In other words, the controller herein may continuously obtain the voltage of the alternating current bus within the specified time. When the voltage of the alternating current bus is continuously less than the first voltage threshold within the specified time, it may be considered that no other power converter in the system supplies power to the alternating current bus in this case. Herein, a power converter whose power-on moment is earlier may determine, within the specified time, that no other power converter supplies power to the alternating current bus, and then supply power to the alternating current bus, so that a success rate of the black start can be further improved.

In a possible implementation, controlling the inverter circuit to output, to the alternating current bus, the alternating current whose amplitude is the rated voltage of the alternating current bus may include: controlling the inverter circuit to increase, based on a specified voltage step or a specified voltage change rate, the amplitude of the alternating current output to the alternating current bus to the rated voltage of the alternating current bus.

Herein, a manner of boosting an output voltage may be preset in each power converter, to ensure that the power converters still remain synchronous in a process of boosting the output voltage. Specifically, a specified voltage step or a specified voltage change rate of each power converter may be preset, so that a controller of each power converter can control an inverter circuit to synchronously boost, based on a parameter such as the same specified voltage step or specified voltage change rate, a voltage of an alternating current output to the alternating current bus, so as to avoid a black start failure caused by a large circulating current generated between the power converters due to asynchronization of output voltages in the voltage boosting process. A control method is simple with high reliability and high applicability.

In a possible implementation, after the alternating current whose amplitude is the rated voltage of the alternating current bus is output to the alternating current bus, when the voltage of the alternating current bus is less than or equal to a third voltage threshold, the alternating current bus is powered off, and the method further includes: performing the black start again after the alternating current bus is powered off.

Herein, when consuming power of the load in the system is excessively high, or power output to the alternating current bus is excessively low due to an excessively small quantity of power converters started at the same time in the system, or the like, the alternating current bus may be powered off, and the black start of the system may fail. Therefore, it may be understood that, after controlling the inverter circuit to output, to the alternating current bus, the alternating current whose amplitude is the rated voltage of the alternating current bus, the controller may continuously obtain the voltage of the alternating current bus within power-off detection time. When the voltage of the alternating current bus is less than or equal to the third voltage threshold, the alternating current bus is powered off, and the black start may be performed again. A determining method is simple, to avoid continuously outputting electric energy to the alternating current bus after the alternating current bus is powered off, so that energy supply costs are reduced.

In a possible implementation, after the alternating current bus is powered off, the method further includes: when the voltage of the alternating current bus is continuously less than the first voltage threshold within specified waiting time, performing the black start again after the specified waiting time ends.

It may be understood that, after the alternating current bus is powered off, or after the alternating current bus is powered off, the power converter may reperform the black start, that is, perform the black start again. It may be understood that the controller may wait for a period of time after the alternating current bus is powered off, that is, perform the black start again after the specified waiting time. Herein, the specified waiting time is set, so that it can be ensured, to a greatest extent, that more power converters in the system complete initialization, that is, are in a power-on state, and frequent attempts of the power converter to perform the black start within the specified waiting time are avoided.

According to this application, the power converter may wait, within the specified waiting time, for another power converter to be in the power-on state, and detect whether another power converter supplies power to the alternating current bus within the specified waiting time. If no other power converter supplies power to the alternating current bus within the specified waiting time, the power converter may perform the black start again after the specified waiting time. Herein, after the alternating current bus is powered off, the power converter can perform the black start with load again in the scenario in which the power converter does not rely on communication or exchange with another power converter or the upper-layer controller, to further improve the success rate and reliability of the black start, which has low costs and high applicability.

In a possible implementation, after the alternating current bus is powered off, the method further includes: when the voltage of the alternating current bus is greater than or equal to the second voltage threshold within specified waiting time, controlling the inverter circuit to output, to the alternating current bus, the alternating current whose amplitude is the second initial voltage.

Herein, within the specified waiting time, if the voltage of the alternating current bus is greater than the second voltage threshold, it indicates that another power converter supplies power to the alternating current bus. In this case, the black start may be immediately performed again. That is, the power converter may output, to the alternating current bus, the alternating current whose amplitude is the second initial voltage, or output, to the alternating current bus, the alternating current whose voltage is synchronous with the voltage of the alternating current bus. A control method is simple with high reliability and high applicability.

### BRIEF DESCRIPTION OF DRAWINGS

FIG. 1 is a diagram of an application scenario of a power converter according to an embodiment of this application;
FIG. 2 is a diagram of a structure of a power converter according to an embodiment of this application;
FIG. 3 is a diagram of a start waveform of a power converter according to an embodiment of this application;
FIG. 4 is a diagram of another start waveform of a power converter according to an embodiment of this application;
FIG. 5 is a diagram of another application scenario of a power converter according to an embodiment of this application;
FIG. 6 is a diagram of a structure of a power supply system according to an embodiment of this application;
FIG. 7 is a schematic flowchart of a black start method according to an embodiment of this application;
FIG. 8 is another schematic flowchart of a black start method according to an embodiment of this application;
FIG. 9 is another schematic flowchart of a black start method according to an embodiment of this application; and
FIG. 10 is another schematic flowchart of a black start method according to an embodiment of this application.

### DESCRIPTION OF EMBODIMENTS

A power converter provided in this application is applicable to a plurality of application fields such as a field of power generation using renewable energy, a field of peak shaving and frequency modulation in conventional power generation, and a field of supplying power to an important device. This may be specifically determined based on an actual application scenario, and is not limited herein. A power supply system provided in this application is applicable to different scenarios such as a large photovoltaic power station, industrial and commercial power generation, and household power generation. This is not limited herein. The following uses an example in which a photovoltaic power supply environment serves as an application scenario of the power converter for description, and details are not described below again.

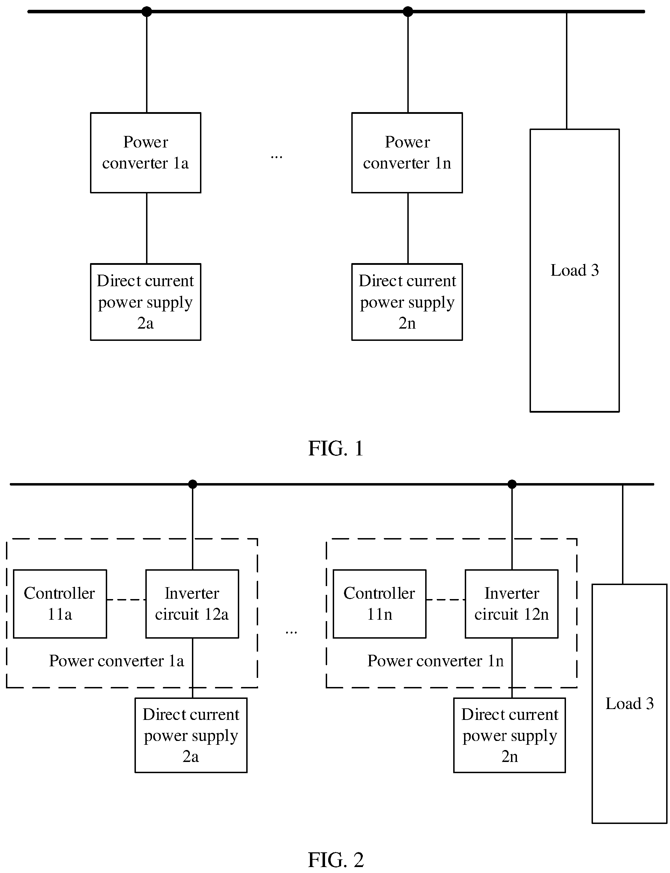

FIG. 1 is a diagram of an application scenario of a power converter according to an embodiment of this application. The power converter provided in this application is applicable to a power supply system. As shown in FIG. 1, the power supply system includes a plurality of power converters: a power converter 1a to a power converter 1n. Ends of the power converters in the power converter 1a to the power converter 1n may be connected to corresponding direct current power supplies: a direct current power supply 2a to a direct current power supply 2n. Other ends of the power converters may be connected in parallel to an alternating current bus and then connected to a load 3. For ease of description, when all the power converters in the power converter 1a to the power converter 1n are used as an example to describe working manners and connection relationships of the power converters in the power supply system, the power converters are collectively represented as power converters 1, and the direct current power supplies are collectively represented as direct current power supplies 2. Details are not described in the following. In some feasible implementations, the power converter 1 may convert direct current energy provided by the direct current power supply 2 into alternating current energy and transmit the alternating current energy to the load 3. For example, the power converter 1 may include a photovoltaic inverter and a power conversion system, the direct current power supply 2 may include an energy storage battery and a photovoltaic module, and the power converter 1 may convert electric energy stored in the energy storage battery or direct current energy generated by the photovoltaic module into alternating current energy, and transmit the alternating current energy to the load 3. It may be understood that, the direct current power supply 2 provided in this application is applicable to an application scenario in which the power converter 1 is connected to the load 3 (for example, an alternating current power grid or an alternating current load) to supply power to a plurality of types of power consuming devices, for example, to supply power to a base station device in a remote area without mains or with poor mains, or supply power to a household device (for example, a refrigerator or an air conditioner). This may be specifically determined based on an actual application scenario, and is not limited herein. Further, it may be understood that the load 3 may include a power consuming device or an electrical transmission device such as a transmission line, an electrical transfer station, a communication base station, or a home device. It may be understood that the direct current power supply 2 provided in this application may include a direct current energy storage device such as the energy storage battery, or may include another power supply that may generate a direct current, or may include a front-end circuit having a function of outputting direct current energy, for example, a functional circuit such as a DC/DC voltage conversion circuit or an AC/DC circuit.

In this application, only an example in which the direct current power supply 2 supplies power to the load 3 by using the power converter 1 is used to describe the power converter and the power supply system provided in this application. It may be understood that the power converter provided in this application may also be applicable to another power supply system or power supply scenario. Details are not described below again. Herein, the power converter 1 may transmit electric energy between the direct current power supply 2 and the load 3. In a process in which each power converter 1 in the power supply system is started for the first time or restarted, each power converter 1 needs to perform a black start with load, to transmit the electric energy to the load end 3. In this embodiment of this application, any power converter 1 in the power supply system may be limited to being the power converter 1a. It should be understood that, when the power supply system has a plurality of power converters 1, control manners and circuit designs of the power converter 1 are similar. Therefore, the following mainly uses a power converter 1a as an example for description. In other words, the power converter 1a needs to be started together with another power converter in the system in a period of start time, so that generating power of the plurality of power converters is greater than consuming power of the load 3, to complete the black start of the system. In other words, the plurality of power converters are started at the same time, so that the following problem can be avoided: When the consuming power of the load end 3 is excessively high or the plurality of power converters are started in series, output power of the system is lower than the consuming power of the load end 3, and consequently, the black start fails, or the alternating current bus is powered off. The power converter 1a is used as an example. Specifically, refer to FIG. 2. FIG. 2 is a diagram of a structure of a power converter according to an embodiment of this application. As shown in FIG. 2, the power converter 1a may include a controller 11a and an inverter circuit 12a. Herein, a direct current end of the inverter circuit 12a may be configured to connect to a direct current power supply 2a. An alternating current end of the inverter circuit 12a may be configured to: connect to an alternating current bus in parallel with another power converter 1a, and then connect to a load 3. The controller 11a may be connected to the inverter circuit 12a.

In a black start process, when a voltage of the alternating current bus is less than a first voltage threshold, the controller 11a may be configured to: control the inverter circuit 12a to output, to the alternating current bus, an alternating current whose amplitude is a first initial voltage U0; and then control the inverter circuit 12a to output, to the alternating current bus, an alternating current whose amplitude is a rated voltage of the alternating current bus, to complete a black start. Herein, the first initial voltage U0 is greater than or equal to the first voltage threshold and less than the rated voltage of the alternating current bus. In the black start process, when the voltage of the alternating current bus is greater than or equal to a second voltage threshold and less than the rated voltage of the alternating current bus, the controller 11a may be configured to: control the inverter circuit 12a to output, to the alternating current bus, an alternating current whose amplitude is a second initial voltage; and then control the inverter circuit 12a to output, to the alternating current bus, the alternating current whose amplitude is the rated voltage of an alternating current bus voltage, to complete the black start. Herein, a voltage of the alternating current whose amplitude is the second initial voltage is synchronous with the voltage of the alternating current bus, and the second voltage threshold is greater than or equal to the first voltage threshold.

According to this application, the power converter 1a may determine, based on the voltage of the alternating current bus, whether another power converter 1a supplies power to the alternating current bus, to output initial voltages of different magnitudes to the alternating current bus based on a magnitude of the voltage of the alternating current bus, and then increase an amplitude of an alternating current output to the alternating current bus to the rated voltage of the alternating current bus. Herein, the power converter 1a can implement the black start with load in a scenario in which the power converter 1a does not rely on communication or exchange with another power converter 1a or an upper-layer controller 11a. This achieves high reliability, a simple structure, low costs, and high applicability.

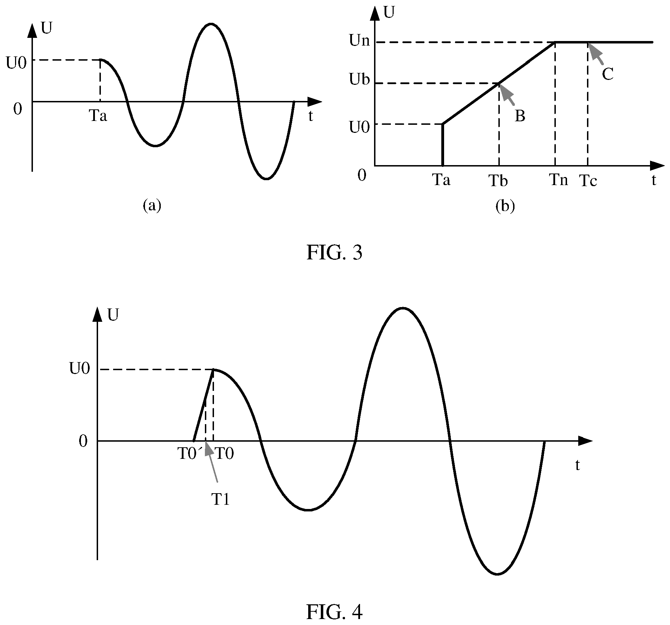

FIG. 3 is a diagram of a start waveform of a power converter according to an embodiment of this application. As shown in a part (a) in FIG. 3, when a voltage of an alternating current bus is continuously less than a first voltage threshold within specified time, a controller 11a herein may be configured to control an inverter circuit 12a to output, to an alternating current bus, an alternating current whose amplitude is a first initial voltage U0. Herein, the first initial voltage U0 is greater than or equal to the first voltage threshold and less than a rated voltage Un of the alternating current bus. Specifically, refer to a part (b) in FIG. 3. After controlling the inverter circuit 12a to output, to the alternating current bus, the alternating current whose amplitude is the first initial voltage U0, the controller 11a may further control the inverter circuit 12a to increase the amplitude of the alternating current output to the alternating current bus to the rated voltage Un of the alternating current bus, to complete a black start. Herein, the specified time may be duration from a power-on moment of a power converter 1a to a delayed start moment T0. It may be understood that, in this application scenario, the power-on moment of the power converter 1a coincides with a moment 0 in FIG. 3, and the delayed start moment T0 of the power converter 1a coincides with a moment Ta in FIG. 3.

In some application scenarios, because power-on moments of power converters are different, delayed start moments T0 corresponding to the power converters are also different. Refer to the part (b) in FIG. 3 again. The power-on moment of the power converter 1a may be after the moment 0. That is, the delayed start moment T0 corresponding to the power converter 1a may be after the moment Ta in FIG. 3. For example, a moment Tb is within the specified time of the power converter 1a. When a voltage of the alternating current bus is greater than or equal to a second voltage threshold and less than the rated voltage Un of the alternating current bus within the specified time, the controller 11a may be further configured to control the inverter circuit 12a to output, to the alternating current bus, an alternating current whose amplitude is a second initial voltage. Herein, the second voltage threshold is greater than or equal to the first voltage threshold, and a voltage of the alternating current whose amplitude is the second initial voltage is synchronous with the voltage of the alternating current bus. That is, a magnitude of the second initial voltage is equal to a voltage Ub, corresponding to the moment Tb, of the alternating current bus, and a phase of the second initial voltage is the same as a phase corresponding to the voltage Ub, corresponding to the moment Tb, of the alternating current bus. After controlling the inverter circuit 12a to output, to the alternating current bus, the alternating current whose amplitude is the second initial voltage, the controller 11a may further control the inverter circuit 12a to output, to the alternating current bus, an alternating current Un whose amplitude is the rated voltage of the alternating current bus, to complete the black start.

Specifically, the controller 11a in the power converter 1a may obtain the voltage of the alternating current bus after initialization is completed, to determine, based on a magnitude of the voltage of the alternating current bus, whether another power converter 1a supplies power to the alternating current bus. Time at which a plurality of power converters 1a complete initialization may be different. That is, power-on moments of the power converters 1a may be different. Therefore, the power converter 1a may continuously obtain the voltage of the alternating current bus within the specified time, to more accurately determine whether another power converter 1a supplies power to the alternating current bus. The specified time herein may be the duration from the power-on moment of the power converter 1a to the delayed start moment T0, and the delayed start moment T0 may be a delayed start moment, set based on an application scenario, of the power converter 1a. In other words, the controller 11a herein may continuously obtain the voltage of the alternating current bus within the specified time. When the voltage of the alternating current bus is continuously less than the first voltage threshold within the specified time, it may be considered that no other power converter 1a in a system supplies power to the alternating current bus in this case. In this case, the controller 11a may control the inverter circuit 12a to output, to the alternating current bus, a voltage, namely, the first initial voltage U0, greater than or equal to the first voltage threshold. After controlling the inverter circuit 12a to output, to the alternating current bus, the alternating current whose amplitude is the first initial voltage U0, the controller 11a may further control the inverter circuit 12a to increase the amplitude of the alternating current output to the alternating current bus to the rated voltage Un of the alternating current bus, to complete the black start. Herein, a power converter whose power-on moment is earlier may determine, within the specified time, that no other power converter supplies power to the alternating current bus, and then supply power to the alternating current bus, so that a success rate of the black start can be further improved.

In some application scenarios, the controller 11a herein may further continuously obtain the voltage of the alternating current bus within the specified time. When the voltage of the alternating current bus is greater than or equal to the second voltage threshold and less than the rated voltage Un of the alternating current bus within the specified time, it may be considered that another power converter 1a in the system supplies power to the alternating current bus in this case. In this case, the controller 11a may control the inverter circuit 12a to output, to the alternating current bus, a voltage, namely, the second initial voltage, synchronous with the voltage of the alternating current bus. After controlling the inverter circuit 12a to output, to the alternating current bus, the alternating current whose amplitude is the second initial voltage, the controller 11a may further control the inverter circuit 12a to increase the amplitude of the alternating current output to the alternating current bus to the rated voltage Un of the alternating current bus, to complete the black start.

In some application scenarios, because the power-on moments of the power converters are different, the delayed start moments T0 corresponding to the power converters are also different. Refer to the part (b) in FIG. 3 again. For example, a moment Tc is within the specified time of the power converter 1a. When the voltage of the alternating current bus is greater than or equal to the rated voltage Un of the alternating current bus, the controller 11a herein may be further configured to control the inverter circuit 12a to output, to the alternating current bus, the alternating current whose voltage is synchronous with the voltage of the alternating current bus. Herein, because the power-on moments of the power converters 1a in the system may be different, the power converter 1a may complete initial power-on only after another power converter 1a increases an amplitude of an alternating current output to the alternating current bus to the rated voltage Un of the alternating current bus. In this case, the voltage of the alternating current bus may be greater than or equal to the rated voltage Un of the alternating current bus, and the controller 11a may further control the inverter circuit 12a to output, to the alternating current bus, the alternating current whose voltage is synchronous with the voltage of the alternating current bus. In this way, the power converter 1a and the another power converter 1a synchronously supply power to a load 3, to further improve the success rate of the black start with load of the system. A control method is simple with high reliability and high applicability.

In some application scenarios, the controller 11a herein may be configured to control the inverter circuit 12a to increase, based on a specified voltage step or a specified voltage change rate, the amplitude of the alternating current output to the alternating current bus to the rated voltage Un of the alternating current bus. For example, the specified voltage change rate herein may be a slope of a curve from the moment Ta to a moment Tn in the part (b) in FIG. 3. Herein, a manner of boosting an output voltage may be preset in each power converter 1a, to ensure that the power converters 1a still remain synchronous in a process of boosting the output voltage. Specifically, a specified voltage step or a specified voltage change rate of each power converter 1a may be preset, so that a controller 11a of each power converter 1a can control an inverter circuit 12a to synchronously boost, based on a parameter such as the same specified voltage step or specified voltage change rate, a voltage of an alternating current output to the alternating current bus, so as to avoid a black start failure caused by a large circulating current generated between the power converters due to asynchronization of output voltages in the voltage boosting process. A control method is simple with high reliability and high applicability.

In some feasible implementations, in a process in which a power converter 1 outputs, to the alternating current bus, an alternating current whose amplitude is the first initial voltage U0, it takes a period of time to boost an output voltage of the power converter 1 to the corresponding first initial voltage U0. In this case, a magnitude of the first initial voltage U0 needs to be further specifically determined. Specifically, if the magnitude of the first initial voltage U0 is excessively large, time for the power converter 1 to boost the output voltage to the first initial voltage U0 may be excessively long, or a charging current in an electronic component such as a capacitor in the power converter 1 is excessively large. In addition, if the magnitude of the first initial voltage U0 is excessively small, when the power converter 1 outputs the alternating current whose amplitude is the first initial voltage U0, another power converter may not be likely to detect a voltage change on the alternating current bus. In other words, the magnitude of the first initial voltage U0 needs to be greater than or equal to a target detection voltage and less than or equal to a target breakdown voltage. Herein, the target detection voltage identifies a minimum value that is of an output voltage output by any power converter to the alternating current bus when the power converter outputs the voltage to the alternating current bus and that allows another power converter to detect the voltage change on the alternating current bus. Herein, the target breakdown voltage may identify a maximum withstand voltage of the capacitor in the power converter, or may identify a maximum voltage value that may be reached when the power converter boosts the voltage at a maximum rate within initial-voltage boosting time.

Specifically, refer to FIG. 4. FIG. 4 is a diagram of another start waveform of a power converter according to an embodiment of this application. As shown in FIG. 4, for example, a power converter 1a outputs, to an alternating current bus, an alternating current whose amplitude is a first initial voltage U0. Herein, a power-on moment corresponding to the power converter 1a is a moment 0 in FIG. 4, and a delayed start moment corresponding to the power converter 1a is a moment T0' in FIG. 4. When a voltage of the alternating current bus is continuously less than a first voltage threshold within specified time, a controller 11a herein may be configured to control an inverter circuit 12a to output, to the alternating current bus, the alternating current whose amplitude is the first initial voltage U0. In other words, when the voltage of the alternating current bus is continuously less than the first voltage threshold from the moment 0 to the moment T0', the controller 11a may control the inverter circuit 12a to output, to the alternating current bus, the alternating current whose amplitude is the first initial voltage U0. From the moment T0' to a moment T0, a component such as a capacitor in the inverter circuit 12a starts to boost a voltage, so as to boost a magnitude of an output voltage of the inverter circuit 12a to the first initial voltage U0. In some feasible implementations, from the moment T0' to the moment T0, another power converter may also reach a delayed start moment. For example, a delayed start moment corresponding to a power converter 1n is a moment T1. For a controller 11n in the power converter 1n, when the voltage of the alternating current bus is continuously less than the first voltage threshold within specified time, the controller 11n in the power converter 1n may also control an inverter circuit 12n to output an alternating current whose amplitude is the first initial voltage U0 to the alternating current bus from the moment T1 to a moment T2 (herein, the moment T2 is after the moment T0, and is not shown in FIG. 4). Herein, voltage boosting time of the power converter may be set to a small value. In other words, time from the moment T0' to the moment T0 and time from the moment T1 to the moment T2 are both short. That is, it may be considered that the output voltages of the power converter 1a and the power converter 1n are synchronous. Herein, corresponding duration for each power converter to boost a voltage to an initial voltage may be set based on a specific application scenario. For example, the duration may be determined based on factors such as a withstand voltage of a capacitor in an inverter circuit, time for a controller to obtain the voltage of the alternating current bus, or synchronization difference time between power converters. Herein, if any plurality of power converters sequentially output voltages of a same magnitude and a same phase within the synchronization difference time, it may be considered that the output voltages of the several power converters are synchronous.

In some feasible implementations, in a process in which a power converter 1 outputs, to the alternating current bus, an alternating current whose amplitude is the first initial voltage, the alternating current whose amplitude is the first initial voltage U0 needs to be output based on a specific phase, so that another power converter quickly detects a voltage change on the alternating current bus. For example, when an inverter circuit 12 in the power converter 1 is a single-phase inverter circuit, an initial phase of the first initial voltage U0 may be 90° or 270°.

In some feasible implementations, after the alternating current bus is powered off, when the voltage of the alternating current bus is continuously less than the first voltage threshold within specified waiting time, the controller 11a may be further configured to: continuously obtain the voltage of the alternating current bus from an end moment of the specified waiting time to the specified time, and control, based on a magnitude of the voltage of the alternating current bus within the specified time, the inverter circuit 12a to output, to the alternating current bus, the alternating current whose amplitude is the first initial voltage U0 or an alternating current whose amplitude is a second initial voltage, to perform a black start again. Herein, when consuming power of a load 3 in a system is excessively high, or power output to the alternating current bus is excessively low due to an excessively small quantity of power converters 1 started at the same time in the system, or the like, the black start may fail, or the alternating current bus is powered off. After the alternating current bus is powered off, the power converter 1 may reperform the black start, that is, perform the black start again. The power converter 1a is used as an example. The controller 11a may perform the black start again immediately after the alternating current bus is powered off, and it may be considered that the specified waiting time is 0 in this case. Further, it may be understood that the controller 11a may alternatively perform the black start again after waiting for a period of time after the alternating current bus is powered off. In this case, the specified waiting time is greater than 0. A specific value of the specified waiting time may be determined based on an application scenario. Herein, the specified waiting time is set, so that it can be ensured, to a greatest extent, that more power converters, such as the power converter 1n, in the system complete initialization, that is, are in a power-on state, and frequent attempts of the power converter 1a to perform the black start within the specified waiting time are avoided. Correspondingly, within the specified waiting time, if the voltage of the alternating current bus is continuously less than the first voltage threshold, it indicates that no other power converter 1 supplies power to the alternating current bus. In this case, similar to a previous black start process, the controller 11a may continuously obtain the voltage of the alternating current bus from the end moment of the specified waiting time to the specified time, and control, based on the magnitude of the voltage of the alternating current bus within the specified time, a magnitude of the output voltage output by the inverter circuit 12a to the alternating current bus. In other words, when the voltage of the alternating current bus is continuously less than the first voltage threshold within the specified time, it may be considered that no other power converter 1 in the system supplies power to the alternating current bus in this case. The controller 11a may control the inverter circuit 12a to output, to the alternating current bus, the alternating current whose amplitude is the first initial voltage U0, and the controller 11a may further control the inverter circuit 12a to increase the amplitude of the alternating current output to the alternating current bus to a rated voltage Un of the alternating current bus. Further, it may be understood that, when the voltage of the alternating current bus is greater than or equal to a second voltage threshold and less than the rated voltage Un of the alternating current bus within the specified time, it may be considered that another power converter 1 in the system supplies power to the alternating current bus in this case. The controller 11a may control the inverter circuit 12a to output, to the alternating current bus, the alternating current whose amplitude is the second initial voltage; and then control the inverter circuit 12a to increase the amplitude of the alternating current output to the alternating current bus to the rated voltage Un of the alternating current bus.

According to this application, the power converter 1a may wait, within the specified waiting time, for another power converter 1a to be in the power-on state, and detect whether another power converter 1a supplies power to the alternating current bus within the specified waiting time. If no other power converter 1a supplies power to the alternating current bus within the specified waiting time, the power converter 1a may output, within the specified time after the specified waiting time, initial voltages of different magnitudes to the alternating current bus based on the magnitude of the voltage of the alternating current bus, and then increase the amplitude of the alternating current output to the alternating current bus to the rated voltage Un of the alternating current bus. Herein, after the alternating current bus is powered off, the power converter 1a can perform the black start with load again in a scenario in which the power converter 1a does not rely on communication or exchange with another power converter 1a or an upper-layer controller, to further improve a success rate and reliability of the black start, which has low costs and high applicability.

In some feasible implementations, the controller 11a herein may be further configured to: when the voltage of the alternating current bus is greater than or equal to the second voltage threshold within the specified waiting time, control the inverter circuit 12a to output, to the alternating current bus, the alternating current whose amplitude is the second initial voltage, to perform the black start again. Herein, it may be understood that the controller 11a may alternatively perform the black start again after waiting for a period of time after the alternating current bus is powered off. In this case, the specified waiting time is greater than 0. The specific value of the specified waiting time may be determined based on an application scenario. Herein, the specified waiting time is set, so that it can be ensured, to a greatest extent, that more power converters 1n in the system complete initialization, that is, are in a power-on state, and frequent attempts of the power converter 1a to perform the black start within the specified waiting time are avoided. Correspondingly, within the specified waiting time, if the voltage of the alternating current bus is greater than the second voltage threshold, it indicates that another power converter 1a supplies power to the alternating current bus. In this case, the power converter 1a may immediately perform the black start again. That is, the power converter 1a may output, to the alternating current bus, the alternating current whose amplitude is the second initial voltage. A control method is simple with high reliability and high applicability.

In some feasible implementations, the controller 11a herein may be further configured to prolong the specified waiting time after the black start performed again fails. It may be understood that, the power converter 1a may prolong the specified waiting time, to wait, within the specified waiting time, for more power converters 1a to be successfully powered on, or wait for the consuming power of the load 3 to be reduced, so as to further improve the success rate and reliability of the black start again, which has low costs and high applicability.

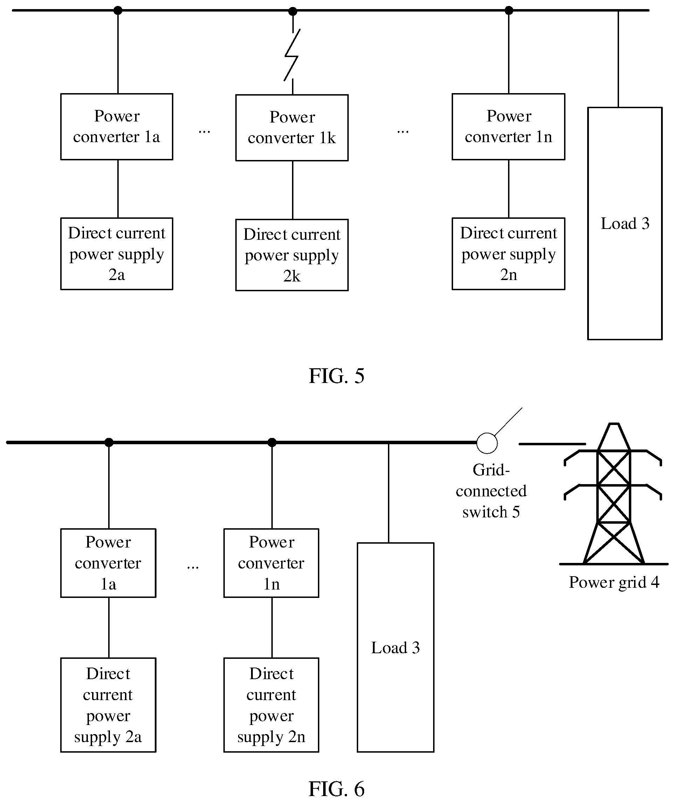

Specifically, refer to FIG. 5. FIG. 5 is a diagram of another application scenario of a power converter according to an embodiment of this application. As shown in FIG. 5, when consuming power of a load 3 is excessively high and is greater than output power of a system, or when another power converter, for example, a power converter 1k, in the system needs to be examined and repaired because the another power converter is faulty and consequently fails to be powered on, or the like, the system may temporarily fail to perform a black start. A power converter 1a is used as an example. The controller 11a herein may be further configured to: when specified waiting time is greater than a waiting time threshold and a voltage of an alternating current bus is less than a first voltage threshold, or when a quantity of reperformed black starts is greater than or equal to a restart threshold and a voltage of an alternating current bus is less than a first voltage threshold, stop performing the black start. That is, the power converter 1a may stop the black start based on an excessively large quantity of reperformed black starts or excessively long specified waiting time. Further, it may be understood that, after the black start is stopped, if the voltage of the alternating current bus is greater than or equal to a second voltage threshold, the power converter 1a learns that another power converter 1a supplies power to the alternating current bus, and reperforms the black start based on the voltage of the alternating current bus. A determining method is simple, to avoid performing the black start again excessively, and further reduce energy supply costs.

This application further provides a power supply system. Specifically, refer to FIG. 6. FIG. 6 is a diagram of a structure of a power supply system according to an embodiment of this application. The power supply system may include a plurality of power converters in any one of the possible implementations shown in FIG. 1 to FIG. 5 or a plurality of other power converters. In this application, only the power converters in FIG. 1 are used as an example for description. As shown in FIG. 6, the power supply system may include a power converter 1a to a power converter 1n. A direct current end of an inverter circuit (not shown in the figure) of each power converter in the power converter 1a to the power converter 1n may be connected to a direct current power supply corresponding to the power converter, that is, a direct current power supply in a direct current power supply 2a to a direct current power supply 2n. An alternating current end of an inverter circuit 12a of each power converter may be configured to connect to an alternating current bus in parallel and then connect to a load 3.

According to this application, each power converter 1a in the system may determine, based on a voltage of the alternating current bus, whether another power converter 1a supplies power to the alternating current bus, to output initial voltages of different magnitudes to the alternating current bus based on a magnitude of the voltage of the alternating current bus, and then increase an amplitude of an alternating current output to the alternating current bus to a rated voltage Un of the alternating current bus. Herein, each power converter 1a can implement the black start with load in a scenario in which the power converter 1a does not rely on communication or exchange with another power converter 1a or an upper-layer controller. This achieves high reliability, a simple structure, low costs, and high applicability.

Further refer to FIG. 6. In some feasible implementations, the power supply system may further include a grid-connected switch 5, and the alternating current end of the inverter circuit 12a of each power converter 1a may be further configured to connect to the alternating current bus in parallel and then connect to a power grid 4 through the grid-connected switch 5. A controller 11a in each power converter 1a herein may be separately configured to start up through a black start when the power grid 4 is powered off or the grid-connected switch 5 is turned off.

According to this application, when the power grid 4 is powered off or the grid-connected switch 5 is turned off, each power converter 1a in the system can implement the black start with load in a scenario in which the power converter 1a does not rely on communication or exchange with another power converter 1a or the upper-layer controller. This achieves high reliability, a simple structure, low costs, and high applicability.

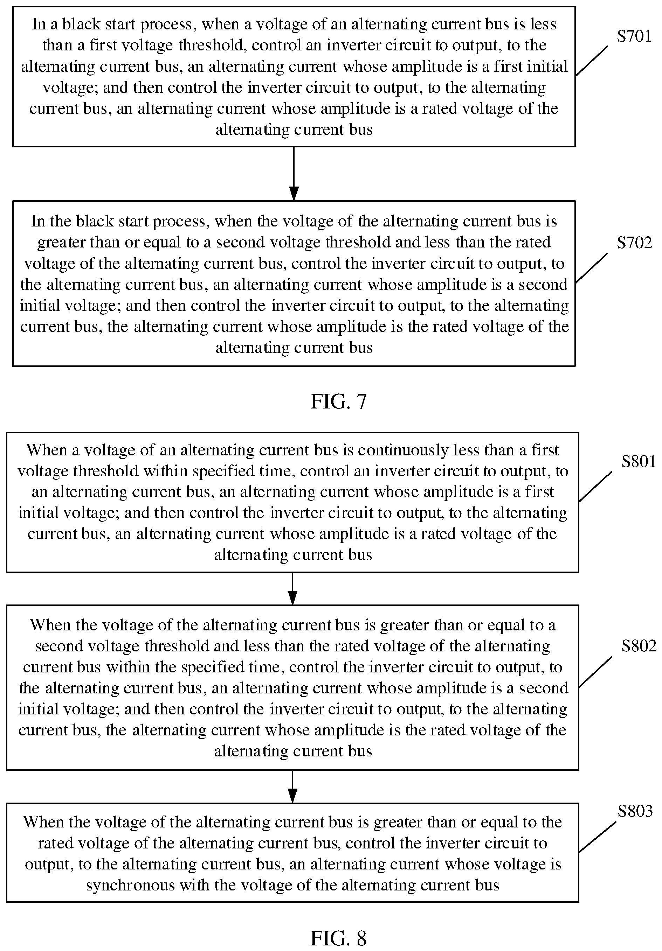

This application further provides a black start method. Specifically, refer to FIG. 7. FIG. 7 is a schematic flowchart of a black start method according to an embodiment of this application. The black start method is applicable to the power converter in any one of the possible implementations shown in FIG. 1 to FIG. 6 or a power converter in a power supply system. The power converter may include a controller and an inverter circuit. A direct current end of the inverter circuit may be configured to connect to a direct current power supply. An alternating current end of the inverter circuit may be configured to: connect to an alternating current bus in parallel with another power converter, and then connect to a load. The controller may be connected to the inverter circuit. As shown in FIG. 7, the method includes the following steps.

S701: In a black start process, when a voltage of the alternating current bus is less than a first voltage threshold, control the inverter circuit to output, to the alternating current bus, an alternating current whose amplitude is a first initial voltage; and then control the inverter circuit to output, to the alternating current bus, an alternating current whose amplitude is a rated voltage of the alternating current bus.

S702: In the black start process, when the voltage of the alternating current bus is greater than or equal to a second voltage threshold and less than the rated voltage of the alternating current bus, control the inverter circuit to output, to the alternating current bus, an alternating current whose amplitude is a second initial voltage; and then control the inverter circuit to output, to the alternating current bus, the alternating current whose amplitude is the rated voltage of the alternating current bus.

In this application, the controller in the power converter may obtain the voltage of the alternating current bus after initialization is completed, to determine, based on a magnitude of the voltage of the alternating current bus, whether another power converter supplies power to the alternating current bus. According to this application, the power converter may determine, based on the voltage of the alternating current bus within specified time, whether another power converter supplies power to the alternating current bus, to output initial voltages of different magnitudes to the alternating current bus based on the magnitude of the voltage of the alternating current bus, and then increase an amplitude of an alternating current output to the alternating current bus to the rated voltage of the alternating current bus. Herein, the power converter can implement a black start with load in a scenario in which the power converter does not rely on communication or exchange with another power converter or an upper-layer controller. This achieves high reliability, a simple structure, low costs, and high applicability.

In some feasible implementations, a manner of boosting an output voltage may be preset in each power converter, to ensure that power converters still remain synchronous in a process of boosting the output voltage. Specifically, a specified voltage step or a specified voltage change rate of each power converter may be preset, so that a controller of each power converter can control an inverter circuit to synchronously boost, based on a parameter such as the same specified voltage step or specified voltage change rate, a voltage of an alternating current output to the alternating current bus, so as to avoid a black start failure caused by a large circulating current generated between the power converters due to asynchronization of output voltages in the voltage boosting process. A control method is simple with high reliability and high applicability.

In some feasible implementations, time at which a plurality of power converters complete initialization may be different. That is, power-on moments of the power converters may be different. Therefore, the power converter may continuously obtain the voltage of the alternating current bus within the specified time, to more accurately determine whether another power converter supplies power to the alternating current bus. For a specific control method, refer to FIG. 8. FIG. 8 is another schematic flowchart of a black start method according to an embodiment of this application. As shown in FIG. 8, the method may include the following steps.

S801: When a voltage of an alternating current bus is continuously less than a first voltage threshold within specified time, control an inverter circuit to output, to an alternating current bus, an alternating current whose amplitude is a first initial voltage; and then control the inverter circuit to output, to the alternating current bus, an alternating current whose amplitude is a rated voltage of the alternating current bus.

S802: When the voltage of the alternating current bus is greater than or equal to a second voltage threshold and less than the rated voltage of the alternating current bus within the specified time, control the inverter circuit to output, to the alternating current bus, an alternating current whose amplitude is a second initial voltage; and then control the inverter circuit to output, to the alternating current bus, the alternating current whose amplitude is the rated voltage of the alternating current bus.

S803: When the voltage of the alternating current bus is greater than or equal to the rated voltage of the alternating current bus, control the inverter circuit to output, to the alternating current bus, an alternating current whose voltage is synchronous with the voltage of the alternating current bus.

Herein, time at which a plurality of power converters complete initialization may be different. That is, power-on moments of the power converters may be different. Therefore, the power converter may continuously obtain the voltage of the alternating current bus within the specified time, to more accurately determine whether another power converter supplies power to the alternating current bus. The specified time herein may be duration from a power-on moment of the power converter to a delayed start moment, and the delayed start moment may be a delayed start moment, set based on an application scenario, of the power converter. In other words, the controller herein may continuously obtain the voltage of the alternating current bus within the specified time. When the voltage of the alternating current bus is continuously less than the first voltage threshold within the specified time, it may be considered that no other power converter in a system supplies power to the alternating current bus in this case. Herein, a power converter whose power-on moment is earlier may determine, within the specified time, that no other power converter supplies power to the alternating current bus, and then supply power to the alternating current bus, so that a success rate of a black start can be further improved. It may be understood that, when the voltage of the alternating current bus is greater than or equal to the second voltage threshold and less than the rated voltage of the alternating current bus within the specified time, it may be considered that another power converter in the system supplies power to the alternating current bus in this case. In this case, the inverter circuit may be controlled to output, to the alternating current bus, the alternating current whose amplitude is the second initial voltage, and then the inverter circuit is controlled to output, to the alternating current bus, the alternating current whose amplitude is the rated voltage of the alternating current bus. Herein, the voltage of the alternating current bus may be greater than or equal to the rated voltage of the alternating current bus, and the controller may further control the inverter circuit to output, to the alternating current bus, output voltage synchronous with the voltage of the alternating current bus. In this way, the power converter and another power converter synchronously supply power to a load, to further improve the success rate of the black start with load of the system. A control method is simple with high reliability and high applicability.

In some feasible implementations, in a process in which the power converter outputs, to the alternating current bus, the alternating current whose amplitude is the first initial voltage, it takes a period of time to boost the output voltage of the power converter to the corresponding first initial voltage. In this case, a magnitude of the first initial voltage needs to be further specifically determined. Specifically, if the magnitude of the first initial voltage is excessively large, time for the power converter to boost the output voltage to the first initial voltage may be excessively long, or a charging current in an electronic component such as a capacitor in the power converter is excessively large. In addition, if the magnitude of the first initial voltage is excessively small, when the power converter outputs the alternating current whose amplitude is the first initial voltage, another power converter may not be likely to detect a voltage change on the alternating current bus. In other words, the magnitude of the first initial voltage needs to be greater than or equal to a target detection voltage and less than or equal to a target breakdown voltage. Herein, the target detection voltage identifies a minimum value that is of an output voltage output by any power converter to the alternating current bus when the power converter outputs the voltage to the alternating current bus and that allows another power converter to detect the voltage change on the alternating current bus. Herein, the target breakdown voltage may identify a maximum withstand voltage of the capacitor in the power converter, or may identify a maximum voltage value that may be reached when the power converter boosts the voltage at a maximum rate within initial-voltage boosting time.

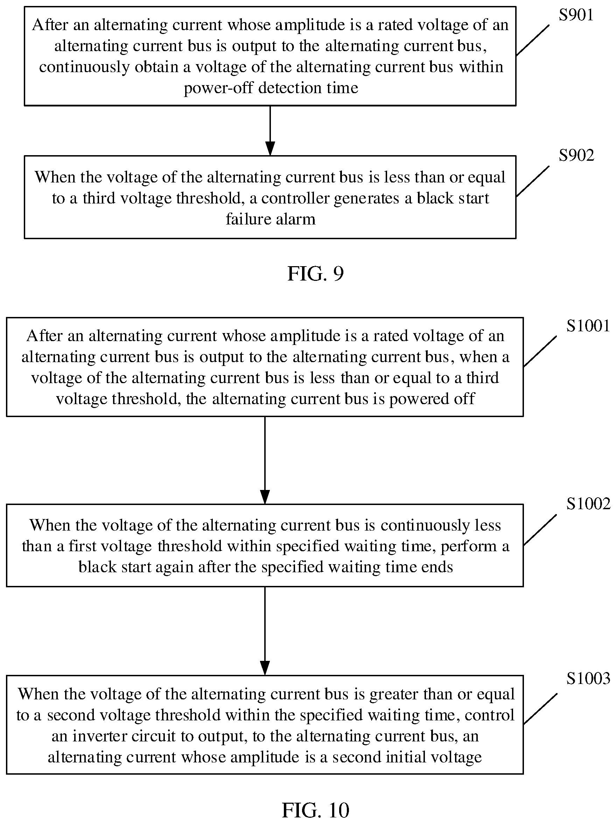

In some feasible implementations, when consuming power of the load in the system is excessively high, or power output to the alternating current bus is excessively low due to an excessively small quantity of power converters started at the same time in the system, or the like, the alternating current bus may be powered off, the black start of the system may fail, and the controller may generate an alarm. For a specific control method, refer to FIG. 9. FIG. 9 is another schematic flowchart of a black start method according to an embodiment of this application. As shown in FIG. 9, the method may include the following steps.

S901: After an alternating current whose amplitude is a rated voltage of an alternating current bus is output to the alternating current bus, continuously obtain a voltage of the alternating current bus within power-off detection time.

S902: When the voltage of the alternating current bus is less than or equal to a third voltage threshold, a controller generates a black start failure alarm.

For example, power-on moments of power converters in a system are different. When power-on moments of some power converters are earlier, and power-on moments of some other power converters are later, it is possible that some power converters have separately output, to the alternating current bus, an alternating current whose amplitude is the rated voltage of the alternating current bus, but some other power converters do not start to output voltages. As a result, output power of the power converters that separately output the rated voltage of the alternating current bus may be less than consuming power of a load, and consequently, the alternating current bus is powered off within the power-off detection time. In a specific application, specific duration of the power-off detection time may be determined based on an application scenario. Therefore, it may be understood that, after controlling an inverter circuit to output, to the alternating current bus, the alternating current whose amplitude is the rated voltage of the alternating current bus, the controller may continuously obtain the voltage of the alternating current bus within the power-off detection time. When the voltage of the alternating current bus is less than or equal to a third voltage threshold, the controller may generate the black start failure alarm. A determining method is simple, to avoid continuously outputting electric energy to the alternating current bus after the alternating current bus is powered off, so that energy supply costs are reduced.

In some feasible implementations, after the alternating current bus is powered off, the power converter may reperform the black start, that is, perform the black start again. FIG. 10 is another schematic flowchart of a black start method according to an embodiment of this application. As shown in FIG. 10, the method may include the following steps.

S1001: After an alternating current whose amplitude is a rated voltage of an alternating current bus is output to the alternating current bus, when a voltage of the alternating current bus is less than or equal to a third voltage threshold, the alternating current bus is powered off.

S1002: When the voltage of the alternating current bus is continuously less than a first voltage threshold within specified waiting time, perform a black start again after the specified waiting time ends.

S1003: When the voltage of the alternating current bus is greater than or equal to a second voltage threshold within the specified waiting time, control an inverter circuit to output, to the alternating current bus, an alternating current whose amplitude is a second initial voltage.

Herein, when consuming power of a load in a system is excessively high, or power output to the alternating current bus is excessively low due to an excessively small quantity of power converters started at the same time in the system, or the like, the black start may fail, or the alternating current bus is powered off. After the alternating current bus is powered off, the power converter may reperform the black start, that is, perform the black start again. It may be understood that a controller may perform the black start again immediately after the alternating current bus is powered off, and it may be considered that the specified waiting time is 0 in this case. Further, it may be understood that the controller may alternatively perform the black start again after waiting for a period of time after the alternating current bus is powered off. In this case, the specified waiting time is greater than 0. A specific value of the specified waiting time may be determined based on an application scenario. Herein, the specified waiting time is set, so that it can be ensured, to a greatest extent, that more power converters in the system complete initialization, that is, are in a power-on state, and frequent attempts of the power converter to perform the black start within the specified waiting time are avoided. Correspondingly, within the specified waiting time, if the voltage of the alternating current bus is continuously less than the first voltage threshold, it indicates that no other power converter supplies power to the alternating current bus. In this case, similar to a previous black start process, the controller may continuously obtain the voltage of the alternating current bus from an end moment of the specified waiting time to specified time, and control, based on a magnitude of the voltage of the alternating current bus within the specified time, a magnitude of an output voltage output by the inverter circuit to the alternating current bus. In other words, when the voltage of the alternating current bus is continuously less than the first voltage threshold within the specified time, it may be considered that no other power converter in the system supplies power to the alternating current bus in this case. The controller may control the inverter circuit to output, to the alternating current bus, the alternating current whose amplitude is the first initial voltage, and the controller may further control the inverter circuit to output, to the alternating current bus, the alternating current whose amplitude is the rated voltage of the alternating current bus. It may be understood that, when the voltage of the alternating current bus is greater than or equal to the second voltage threshold and less than the rated voltage of the alternating current bus within the specified time, it may be considered that another power converter in the system supplies power to the alternating current bus in this case. The controller may control the inverter circuit to output, to the alternating current bus, the alternating current whose amplitude is the second initial voltage; and then control the inverter circuit to output, to the alternating current bus, the alternating current whose amplitude is the rated voltage of the alternating current bus.

According to this application, the power converter may wait, within the specified waiting time, for another power converter to be in the power-on state, and detect whether another power converter supplies power to the alternating current bus within the specified waiting time. If no other power converter supplies power to the alternating current bus within the specified waiting time, the power converter may output, within the specified time after the specified waiting time, initial voltages of different magnitudes to the alternating current bus based on the magnitude of the voltage of the alternating current bus, and then increase an amplitude of an alternating current output to the alternating current bus to the rated voltage of the alternating current bus. Herein, after the alternating current bus is powered off, the power converter can perform the black start with load again in a scenario in which the power converter does not rely on communication or exchange with another power converter or an upper-layer controller, to further improve a success rate and reliability of the black start, which has low costs and high applicability.

In some feasible implementations, after the alternating current bus is powered off, the method may further include: when the voltage of the alternating current bus is greater than or equal to the second voltage threshold within specified waiting time, controlling the inverter circuit to output, to the alternating current bus, the alternating current whose amplitude is the second initial voltage, to perform the black start again.

Herein, it may be understood that the controller may alternatively perform the black start again after waiting for a period of time after the alternating current bus is powered off. In this case, the specified waiting time is greater than 0. The specific value of the specified waiting time may be determined based on an application scenario. Herein, the specified waiting time is set, so that it can be ensured, to a greatest extent, that more power converters in the system complete initialization, that is, are in the power-on state, and frequent attempts of the power converter to perform the black start within the specified waiting time are avoided. Correspondingly, within the specified waiting time, if the voltage of the alternating current bus is greater than the second voltage threshold, it indicates that another power converter supplies power to the alternating current bus. In this case, the power converter may immediately perform the black start again. That is, the power converter may output, to the alternating current bus, the alternating current whose amplitude is the second initial voltage. A control method is simple with high reliability and high applicability.

In some feasible implementations, the method may further include: After the black start performed again fails, the controller prolongs the specified waiting time. It may be understood that, the power converter may prolong the specified waiting time, to wait, within the specified waiting time, for more power converters to be successfully powered on, or wait for the consuming power of the load to be reduced, so as to further improve the success rate and reliability of the black start again, which has low costs and high applicability.

In some feasible implementations, the method may further include: when the specified waiting time is greater than a waiting time threshold and the voltage of the alternating current bus is less than the first voltage threshold, or when a quantity of reperformed black starts is greater than or equal to a restart threshold and the voltage of the alternating current bus is less than the first voltage threshold, stopping performing the black start again. It may be understood that, when the consuming power of the load is excessively high and is greater than output power of the system, or when another power converter in the system needs to be examined and repaired because the another power converter is faulty and consequently fails to be powered on, or the like, the system may temporarily fail to perform the black start. In this case, the power converter may stop the black start based on an excessively large quantity of reperformed black starts or excessively long specified waiting time. Further, it may be understood that, after the black start is stopped, if the voltage of the alternating current bus is greater than or equal to a second voltage threshold, the power converter learns that another power converter supplies power to the alternating current bus, and reperforms the black start based on the voltage of the alternating current bus. A determining method is simple, to avoid performing the black start again excessively, and further reduce energy supply costs.

According to this application, the power converter may determine, based on the voltage of the alternating current bus within specified time, whether another power converter supplies power to the alternating current bus, to output initial voltages of different magnitudes to the alternating current bus based on the magnitude of the voltage of the alternating current bus, and then increase the amplitude of the alternating current output to the alternating current bus to the rated voltage of the alternating current bus. Herein, the power converter can implement the black start with load in the scenario in which the power converter does not rely on communication or exchange with another power converter or the upper-layer controller. This achieves high reliability, a simple structure, low costs, and high applicability.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A power converter, wherein the power converter comprises a controller and an inverter circuit, a direct current end of the inverter circuit is configured to connect to a photovoltaic module or an energy storage battery, an alternating current end of the inverter circuit is configured to connect to a load through an alternating current bus, and the controller is connected to the inverter circuit; and
in a black start process, when a voltage of the alternating current bus is less than a first voltage threshold, the controller is configured to: control the inverter circuit to output, to the alternating current bus, an alternating current whose amplitude is a first initial voltage; and then control the inverter circuit to output, to the alternating current bus, an alternating current whose amplitude is a rated voltage of the alternating current bus, to complete a black start, wherein the first initial voltage is greater than or equal to the first voltage threshold and less than the rated voltage of the alternating current bus; or
in the black start process, when the voltage of the alternating current bus is greater than or equal to a second voltage threshold and less than the rated voltage of the alternating current bus, the controller is configured to: control the inverter circuit to output, to the alternating current bus, an alternating current whose amplitude is a second initial voltage, wherein a voltage of the alternating current whose amplitude is the second initial voltage is synchronous with the voltage of the alternating current bus; and then control the inverter circuit to output, to the alternating current bus, the alternating current whose amplitude is the rated voltage of the alternating current bus, to complete the black start, wherein the second voltage threshold is greater than or equal to the first voltage threshold.

2. The power converter according to claim 1, wherein when the voltage of the alternating current bus is continuously less than the first voltage threshold within specified time, the controller is configured to control the inverter circuit to output, to the alternating current bus, the alternating current whose amplitude is the first initial voltage.

3. The power converter according to claim 1 or 2, wherein the controller is configured to control the inverter circuit to increase, based on a specified voltage step or a specified voltage change rate, an amplitude of an alternating current output to the alternating current bus to the rated voltage of the alternating current bus.

4. The power converter according to any one of claims 1 to 3, wherein after the alternating current whose amplitude is the rated voltage of the alternating current bus is output to the alternating current bus, when the voltage of the alternating current bus is less than or equal to a third voltage threshold, the alternating current bus is powered off, and the controller is further configured to perform the black start again after the alternating current bus is powered off.

5. The power converter according to claim 4, wherein after the alternating current bus is powered off, when the voltage of the alternating current bus is continuously less than the first voltage threshold within specified waiting time, the controller is further configured to perform the black start again after the specified waiting time ends.

6. The power converter according to claim 4, wherein after the alternating current bus is powered off, when the voltage of the alternating current bus is greater than or equal to the second voltage threshold within specified waiting time, the controller is further configured to control the inverter circuit to output, to the alternating current bus, the alternating current whose amplitude is the second initial voltage, to perform the black start again.

7. The power converter according to any one of claims 4 to 6, wherein the controller is further configured to prolong the specified waiting time after the black start performed again fails.

8. The power converter according to any one of claims 4 to 7, wherein the controller is further configured to: when the specified waiting time is greater than a waiting time threshold and the voltage of the alternating current bus is less than the first voltage threshold, or when a quantity of reperformed black starts is greater than or equal to a restart threshold and the voltage of the alternating current bus is less than the first voltage threshold, stop performing the black start again.

9. A power supply system, wherein the power supply system comprises a plurality of power converters according to any one of claims 1 to 8, a direct current end of an inverter circuit of each power converter of the plurality of power converters is separately configured to connect to a photovoltaic module or an energy storage battery, and an alternating current end of the inverter circuit of each power converter is configured to connect to a load through an alternating current bus.

10. A black start method, wherein the method comprises:
in a black start process, when a voltage of the alternating current bus is less than a first voltage threshold, controlling the inverter circuit to output, to the alternating current bus, an alternating current whose amplitude is a first initial voltage; and then controlling the inverter circuit to output, to the alternating current bus, an alternating current whose amplitude is a rated voltage of the alternating current bus, to complete a black start, wherein the first initial voltage is greater than or equal to the first voltage threshold and less than the rated voltage of the alternating current bus; or
in the black start process, when the voltage of the alternating current bus is greater than or equal to a second voltage threshold and less than the rated voltage of the alternating current bus, controlling the inverter circuit to output, to the alternating current bus, an alternating current whose amplitude is a second initial voltage, wherein a voltage of the alternating current whose amplitude is the second initial voltage is synchronous with the voltage of the alternating current bus; and then controlling the inverter circuit to output, to the alternating current bus, the alternating current whose amplitude is the rated voltage of the alternating current bus, to complete the black start, wherein the second voltage threshold is greater than or equal to the first voltage threshold.

11. The black start method according to claim 10, wherein when the voltage of the alternating current bus is less than the first voltage threshold, controlling the inverter circuit to output, to the alternating current bus, the alternating current whose amplitude is the first initial voltage comprises:
when the voltage of the alternating current bus is continuously less than the first voltage threshold within specified time, controlling the inverter circuit to output, to the alternating current bus, the alternating current whose amplitude is the first initial voltage.

12. The black start method according to claim 10 or 11, wherein controlling the inverter circuit to output, to the alternating current bus, the alternating current whose amplitude is the rated voltage of the alternating current bus comprises:
controlling the inverter circuit to increase, based on a specified voltage step or a specified voltage change rate, an amplitude of an alternating current output to the alternating current bus to the rated voltage of the alternating current bus.

13. The black start method according to any one of claims 10 to 12, wherein after the alternating current whose amplitude is the rated voltage of the alternating current bus is output to the alternating current bus, when the voltage of the alternating current bus is less than or equal to a third voltage threshold, the alternating current bus is powered off, and the method further comprises:
performing the black start again after the alternating current bus is powered off.

14. The black start method according to claim 13, wherein after the alternating current bus is powered off, the method further comprises:
when the voltage of the alternating current bus is continuously less than the first voltage threshold within specified waiting time, performing the black start again after the specified waiting time ends.

15. The black start method according to claim 13, wherein after the alternating current bus is powered off, the method further comprises:
when the voltage of the alternating current bus is greater than or equal to the second voltage threshold within specified waiting time, controlling the inverter circuit to output, to the alternating current bus, the alternating current whose amplitude is the second initial voltage, to perform the black start again.
